# EUROPÄISCHE PATENTANMELDUNG

(11) **EP 1 699 124 A2**
(43) Veröffentlichungstag der Anmeldung: **06.09.2006**
(21) Anmeldenummer: 05024164.5
(22) Anmeldetag: 05.11.2005
(51) Int. Cl.: H02K 5/124

(54) **Elektromotor**

(30) Priorität: 04.03.2005 DE 102005009928
(71) Anmelder: Bühler Motor GmbH, 90459 Nürnberg (DE)
(72) Erfinder: Peterreins, Thomas, 90475 Nürnberg (DE); Popp, Dieter, 90765 Fürth (DE); Kudsi, Mounir, 90461 Nürnberg (DE)

(57) **Zusammenfassung**

Die Erfindung betrifft einen Elektromotor (1), bestehend aus einem ein Gehäuse (3) aufweisenden Stator (4), einem Rotor (5), der eine im Stator (4) drehbar gelagerte Welle (6) aufweist und einer Dichteinrichtung (2), die einen vom Gehäuse (3) umschlossenen Rotorraum (7) von einem weiteren mit Schadstoffen verunreinigten Raum (8) abdichtet. Aufgabe der Erfindung ist es auf möglichst einfache Weise mit einfachsten Mitteln eine große Toleranzen zulassende Dichteinrichtung darzustellen, bei der auch bei einem gewissen Verschleiß des Dichtmaterials die Dichtfunktion erhalten bleibt und eine Dickenkompression der Dichtscheibe sicher vermieden werden kann, so dass der Reibungsverlust stets gering bleibt. Diese Aufgabe wird erfindungsgemäß dadurch gelöst, dass die Dichteinrichtung (2) aus einer elastischen, zumindest annähernd konstant dicken Dichtscheibe (9), die eine zentrale, einen Abschnitt der Welle (6) aufnehmende Ausnehmung (10) und einen mit dem Gehäuse (3) in Berührung stehenden Ringflächenbereich (11) aufweist, und einer Gegenhalterscheibe (12), die fest auf der Welle (6) aufgepresst ist und die Berührung der Dichtscheibe (9) mit dem Gehäuse (3) bewirkt, besteht und dass der Abstand zwischen der dem Gehäuse (3) zugewandten Stirnseite der Gegenhalterscheibe (12) von dem mit der Dichtscheibe (9) in Berührung stehenden Gehäusebereich (15) kleiner ist als die Dicke der Dichtscheibe (9).

## Beschreibung

Die Erfindung betrifft einen Elektromotor (1), bestehend aus einem ein Gehäuse (3) aufweisenden Stator (4), einem Rotor (5), der eine im Stator (4) drehbar gelagerte Welle (6) aufweist und einer Dichteinrichtung (2), die einen vom Gehäuse (3) umschlossenen Rotorraum (7) von einem weiteren mit Schadstoffen verunreinigten Raum (8) abdichtet.

Aus der DE 25 11 084 A1 ist ein gattungsgemäßer Elektromotor bekannt. Die Dichteinrichtung besteht dabei aus einem sich an einem Ritzel abstützenden Plandichtungsring, der einen Befestigungsbereich und einen Dichtbereich aufweist. Dieser Plandichtungsring weist eine relativ komplizierte Form auf, weshalb seine Herstellung entsprechend aufwändig ist. Zudem ist ein relativ großer axialer Einbauraum erforderlich. Die Dichtung wirkt zwischen Rotor und Stator/Gehäuse weshalb der Plandichtungsring am Stator/Gehäuse reibt. Diese Reibung darf nicht zu groß sein, um die Reibungsverluste gering zu halten und sie darf nicht zu klein sein, weil sonst die Dichtwirkung zu gering ist. Bei einer zu steifen Dichtung muss das Ritzel, an dem sich der Plandichtungsring abstützt sehr genau positioniert werden, um die Reibkraft optimal einzustellen. Diese genaue Positionierung ist sehr aufwändig und unwirtschaftlich. Durch den unvermeidlichen Verschleiß des Plandichtungsrings verschlechtert sich die Dichtwirkung, weil der Plandichtungsring aufgrund seines geringen Durchmessers nicht elastisch genug ist.

Aufgabe der Erfindung ist es daher auf möglichst einfache Weise mit einfachsten Mitteln eine große Toleranzen zulassende Dichteinrichtung darzustellen, bei der auch bei einem gewissen Verschleiß des Dichtmaterials die Dichtfunktion erhalten bleibt und eine Dickenkompression der Dichtscheibe sicher vermieden werden kann, so dass der Reibungsverlust stets gering bleibt.

Diese Aufgabe wird erfindungsgemäß dadurch gelöst, dass die Dichteinrichtung (2) aus einer elastischen, zumindest annähernd konstant dicken Dichtscheibe (9), die eine zentrale, einen Abschnitt der Welle (6) aufnehmende Ausnehmung (10) und einen mit dem Gehäuse (3) in Berührung stehenden Ringflächenbereich (11) aufweist, und einer Gegenhalterscheibe (12), die fest auf der Welle (6) aufgepresst ist und die Berührung der Dichtscheibe (9) mit dem Gehäuse (3) bewirkt, besteht und dass der Abstand zwischen der dem Gehäuse (3) zugewandten Stirnseite der Gegenhalterscheibe (12) von dem mit der Dichtscheibe (9) in Berührung stehenden Gehäusebereich (15) kleiner ist als die Dicke der Dichtscheibe (9). Da die Dichtscheibe eine konstante Dicke aufweist, ist sie relativ einfach und wirtschaftlich herstellbar. Die Gegenhalterscheibe erlaubt eine genaue Einstellung der Reibkraft zwischen Dichtscheibe und Gehäuse, unabhängig von der Lage zusätzlich auf der Welle angeordneter Funktionselemente, wie Ritzel oder Exzenter. Der geringe Abstand zwischen der Gegenhalterscheibe und dem Gehäuse bewirkt eine geringfügige Durchbiegung oder Wölbung der Dichtscheibe, so dass sie sicher an dem Gehäuse anliegt. Diese geringfügige Verformung erfordert kaum Kraft, so dass auch die Reibkraft gering ist.

Weiterbildungen der Erfindung werden in den Unteransprüchen dargestellt. Zweckmäßigerweise besteht die Dichtscheibe aus einem Elastomermaterial, weil dieses sich am leichtesten an geringfügige Unebenheiten am Gehäuse anpassen kann um eine gute Dichtwirkung zu erzielen.

Es ist wichtig, dass die Dichtscheibe (9) im Vormontagezustand eben ist, weil dadurch eine definierte Vorspannung leichter einstellbar ist.

Besonders vorteilhaft ist es, wenn die Dichtscheibe (9) ein Stanzteil ist. Dadurch lassen sich große Stückzahlen der Dichtscheibe auf besonders einfache Weise, also mit einfachen Werkzeugen und in einem Arbeitsgang herstellen.

Wenn der Abstand der dem Gehäuse (3) zugewandten Stirnseite der Gegenhalterscheibe (12) von dem mit der Dichtscheibe (9) in Berührung stehenden Gehäusebereich (15) größer ist als Null, wird gewährleistet, dass die Dichtscheibe nicht eingeklemmt wird.

Der Idealfall, dass die Dichtscheibe (9) durch die Wirkung der Gegenhalterscheibe (12) einerseits und des Gehäuses (3) andererseits ungewölbt, aber nicht gequetscht ist, ist in der Breite nicht erreichbar, deshalb wird eine geringfügige Wölbung angestrebt, wobei aber sicher vermieden werden muss, dass die Dichtscheibe gequetscht wird.

Die Reibkraft kann besonders niedrig gehalten werden, wenn der Durchmesser der Gegenhalterscheibe (12) deutlich geringer ist als der Durchmesser der Dichtscheibe (9), insbesondere vergrößert sich dadurch der Toleranzbereich bezüglich der Lage der Gegenhalterscheibe zum Gehäuse.

Da die Wölbung der Dichtscheibe notwendig ist, muss vermieden werden, dass Reibung durch Kanten entsteht, die an den die Wölbung verursachenden Teilen vorhanden sein könnten, daher weist die Gegenhalterscheibe (12) auf der der Dichtscheibe (9) zugewandten Seite eine Verrundung oder eine Fase (13) auf, an die ein ringförmiger Bereich (14) der Dichtscheibe (9) anlegbar ist. Daher ist auch der Berührungsbereich (15) des Gehäuses (3) mit der Dichtscheibe (9) abgerundet oder ist eine der Welle (6) zugeneigte Fase (16).

Um eine gute Dichtwirkung zu erzielen ist es wichtig die Elastomerscheibe zur Welle hin abzudichten. Um dies zu erreichen ist vorgesehen dass die Dichtscheibe (9) drehfest auf der Welle (6) befestigt ist. Um dies zu erreichen ist die Dichtscheibe (9) auf der Welle (6) aufgepresst. Daher tritt zwischen einem ringförmigen Bereich der Dichtscheibe (9) und dem damit in Berührung stehenden Gehäusebereich (15) bei Motorbetrieb Reibung mit geringer Normalkraft und damit geringer Reibkraft auf.

Die Gegenhalterscheibe (12) besteht aus einem Metallring, z.B. einem Messingring, sie ist somit einfach herstellbar.

Der erfindungsgemäße Elektromotor weist vorzugsweise ein tiefgezogenes Gehäuse (3) auf, wobei der mit der Dichtscheibe (9) in Berührung stehende Bereich (15) nach dem Tiefziehen mechanisch unbearbeitet bleibt. Dies bietet erhebliche wirtschaftliche Vorteile, weil ein Arbeitsgang vollständig entfallen kann. Eine gute Dichtwirkung ist aufgrund der besonderen Geometrie der Dichteinrichtung dennoch gesichert.

Um keine besonderen Vorkehrungen treffen zu müssen, dass die Gegenhalterscheibe richtig montiert wird, ist vorgesehen, diese symmetrisch zu gestalten.

Der Elektromotor mit der beschriebenen Dichteinrichtung kann beispielhaft als Antrieb für ein Abgasrückführventil in einem Kraftfahrzeug eingesetzt werden, weil hierbei die Verhältnisse bestehen, die eine Abdichtung des Elektromotors erfordern.

Ein Ausführungsbeispiel der Erfindung wird nachstehend anhand der Zeichnung näher erläutert: Es zeigen:
Fig. 1 einen Schnitt durch einen Elektromotor im Bereich einer Dichteinrichtung,
Fig. 2 eine Dichtscheibe und
Fig. 3 eine Gegenhalterscheibe.

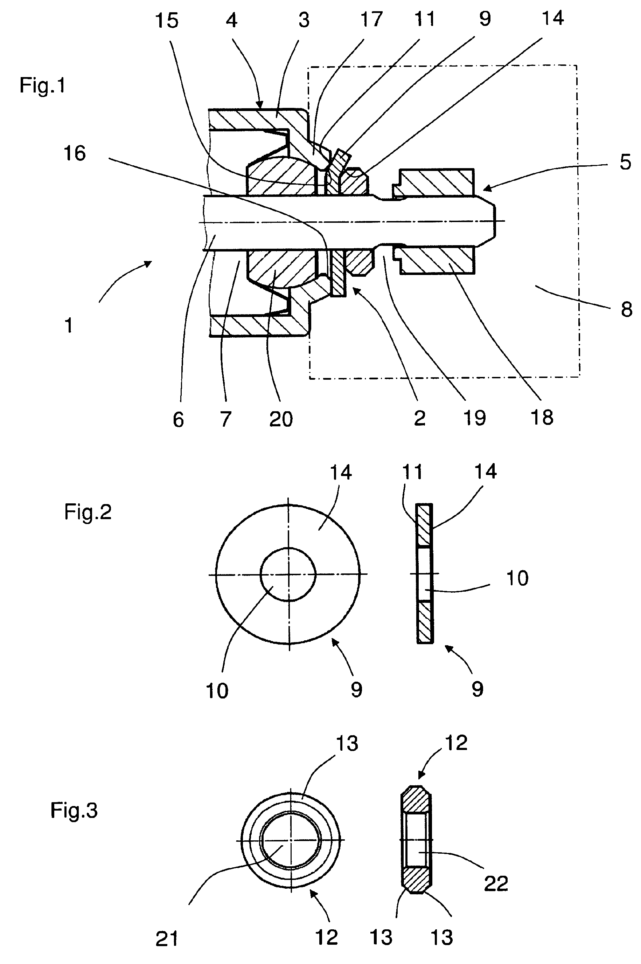

Fig.1 zeigt einen Schnitt durch einen Elektromotor 1 im Bereich einer Dichteinrichtung 2, mit einer in einem Lager 20 gelagerten Welle 6 als Bestandteil eines Rotors 5 und einem Gehäuse 3 als Bestandteil eines Stators 4. Das Gehäuse 3 ist tiefgezogen und weist einen Lageraufnahmebereich 17 auf, der einen Berührungsbereich 15 umfasst, mit dem eine Dichtscheibe 9 in Berührung steht, die von einer auf der Welle 6 aufgepressten Gegenhalterscheibe 12 axial abgestützt ist. Außerhalb eines Rotorraums 7 ist auf der Welle 6 ein Funktionsteil in Form eines Ritzels 18 befestigt. Die Welle weist zwischen Dichteinrichtung 2 und Ritzel 18 einen Einschnitt 19 auf. Der Berührungsbereich 15 des tiefgezogenen Gehäuses 3 ist in Form einer zur Welle 6 hin geneigten Fase 16 ausgebildet. Die Gegenhalterscheibe 12 weist eine Fase 13 auf, die dazu dient dass sich die Dichtscheibe 9 leichter wölben oder durchbiegen kann. Die Dichteinrichtung trennt den Rotorraum 7 von einem verunreinigten Raum 8, der hier nur durch eine strichpunktierte Linie angedeutet ist. Die Dichtscheibe 9 und die Gegenhalterscheibe 12 sind in zwei Extremeinbaulagen dargestellt, die obere, zeigt die maximale Nähe der Gegenhalterscheibe zum Motorgehäuse und die untere die minimale Nähe die gerade noch erlaubt ist um die gewünschte Dichtwirkung zu erzielen. Zwischen diesen beiden Grenzstellungen befindet sich der Toleranzbereich innerhalb dessen sich die Gegenhalterscheibe nach seiner Montage befinden darf. Dieser Toleranzbereich ist hier besonders groß, so dass eine zuverlässige Montage einfach erreichbar ist.

Fig. 2 zeigt die Dichtscheibe 9 mit ihrem Berührungsbereich 11 mit dem Gehäuse, ihrem Berührungsbereich 14 mit der Gegenhalterscheibe und einer zentralen Ausnehmung 21 für die Aufnahme der Welle. Die Dichtscheibe ist vollkommen symmetrisch ausgebildet.

Fig. 3 zeigt die Gegenhalterscheibe 12 mit ihren auf beiden Seiten symmetrisch angeordneten Fasen 13 und einer zentralen Aufnahme 22 für die Welle.

### Bezugszeichenliste

- 1: Elektromotor
- 2: Dichteinrichtung
- 3: Gehäuse
- 4: Stator
- 5: Rotor
- 6: Welle
- 7: Rotorraum
- 8: verunreinigter Raum
- 9: Dichtscheibe
- 10: Ausnehmung in der Dichtscheibe
- 11: Ringflächenbereich der Dichtscheibe anliegend an Gehäuse
- 12: Gegenhalterscheibe
- 13: Fase an der Gegenhalterscheibe
- 14: Ringflächenbereich der Dichtscheibe anliegend an Gegenhalterscheibe
- 15: Berührungsbereich des Gehäuses
- 16: Fase am Gehäuse
- 17: Lageraufnahmebereich
- 18: Ritzel
- 19: Einschnitt in der Welle
- 20: Lager
- 21: Zentrale Aufnahme der Gegenhalterscheibe

## Patentansprüche

1. Elektromotor (1), bestehend aus einem ein Gehäuse (3) aufweisenden Stator (4), einem Rotor (5), der eine im Stator (4) drehbar gelagerte Welle (6) aufweist und einer Dichteinrichtung (2), die einen vom Gehäuse (3) umschlossenen Rotorraum (7) von einem weiteren mit Schadstoffen verunreinigten Raum (8) abdichtet, **dadurch gekennzeichnet, dass** die Dichteinrichtung (2) aus einer elastischen, zumindest annähernd konstant dicken Dichtscheibe (9), die eine zentrale, einen Abschnitt der Welle (6) aufnehmende Ausnehmung (10) und einen mit dem Gehäuse (3) in Berührung stehenden Ringflächenbereich (11) aufweist, und einer Gegenhalterscheibe (12), die fest auf der Welle (6) aufgepresst ist und die Berührung der Dichtscheibe (9) mit dem Gehäuse (3) bewirkt, besteht und dass der Abstand zwischen der dem Gehäuse (3) zugewandten Stirnseite der Gegenhalterscheibe (12) von dem mit der Dichtscheibe (9) in Berührung stehenden Gehäusebereich (15) kleiner ist als die Dicke der Dichtscheibe (9).

2. Elektromotor nach Anspruch 1, **dadurch gekennzeichnet, dass** die Dichtscheibe (9) aus einem Elastomermaterial besteht.

3. Elektromotor nach Anspruch 1 oder 2, **dadurch gekennzeichnet, dass** die Dichtscheibe (9) im Vormontagezustand eben ist.

4. Elektromotor nach Anspruch 1, 2 oder 3, **dadurch gekennzeichnet, dass** die Dichtscheibe (9) ein Stanzteil ist.

5. Elektromotor nach Anspruch 1, 2, 3 oder 4, **dadurch gekennzeichnet, dass** der Abstand zwischen der dem Gehäuse (3) zugewandten Stirnseite der Gegenhalterscheibe (12) von dem mit der Dichtscheibe (9) in Berührung stehenden Gehäusebereich (15) größer ist als Null.

6. Elektromotor nach Anspruch 1, 2, 3, 4 oder 5, **dadurch gekennzeichnet, dass** die Dichtscheibe (9) durch die Wirkung der Gegenhalterscheibe (12) einerseits und des Gehäuses (3) andererseits gewölbt sein kann, aber nicht gequetscht ist.

7. Elektromotor nach Anspruch 1, 2, 3, 4 oder 5, **dadurch gekennzeichnet, dass** die Dichtscheibe (9) durch die Wirkung der Gegenhalterscheibe (12) einerseits und des Gehäuses (3) andererseits gewölbt, aber nicht gequetscht ist.

8. Elektromotor nach zumindest einem der vorangehenden Ansprüche, **dadurch gekennzeichnet, dass** der Durchmesser der Gegenhalterscheibe (12) deutlich geringer ist als der Durchmesser der Dichtscheibe (9).

9. Elektromotor nach zumindest einem der vorangehenden Ansprüche, **dadurch gekennzeichnet, dass** die Gegenhalterscheibe (12) auf der der Dichtscheibe (9) zugewandten Seite eine Verrundung oder eine Fase (13) aufweist, an die ein ringförmiger Bereich (14) der Dichtscheibe (9) anlegbar ist.

10. Elektromotor nach zumindest einem der vorangehenden Ansprüche, **dadurch gekennzeichnet, dass** der Berührungsbereich (15) des Gehäuses (3) mit der Dichtscheibe (9) abgerundet oder eine der Welle (6) zugeneigte Fase (16) ist.

11. Elektromotor nach zumindest einem der vorangehenden Ansprüche, **dadurch gekennzeichnet, dass** die Dichtscheibe (9) drehfest auf der Welle (6) befestigt ist.

12. Elektromotor nach zumindest einem der vorangehenden Ansprüche, **dadurch gekennzeichnet, dass** die Dichtscheibe (9) auf die Welle (6) aufgepresst ist.

13. Elektromotor nach zumindest einem der vorangehenden Ansprüche, **dadurch gekennzeichnet, dass** zwischen einem ringförmigen Bereich der Dichtscheibe (9) und dem damit in Berührung stehenden Gehäusebereich (15) bei Motorbetrieb Reibung mit geringer Normalkraft und damit geringer Reibkraft auftritt.

14. Elektromotor nach zumindest einem der vorangehenden Ansprüche, **dadurch gekennzeichnet, dass** die Gegenhalterscheibe (12) aus einem Metallring, z.B. einem Messingring, besteht.

15. Elektromotor nach zumindest einem der vorangehenden Ansprüche, **dadurch gekennzeichnet, dass** das Gehäuse (3) tiefgezogen ist und der mit der Dichtscheibe (9) in Berührung stehende Bereich (15) nach dem Tiefziehen mechanisch unbearbeitet bleibt.

16. Elektromotor nach zumindest einem der vorangehenden Ansprüche, **dadurch gekennzeichnet, dass** er ein Abgasrückführventil in einem Kraftfahrzeug antreibt.

17. Elektromotor nach zumindest einem der vorangehenden Ansprüche, **dadurch gekennzeichnet, dass** die Gegenhalterscheibe (12) symmetrisch ausgebildet ist.
